# EUROPEAN PATENT SPECIFICATION

(11) **EP 0 746 977 B1**
(45) Date of publication and mention of the grant of the patent: **29.12.1999**
(21) Application number: 96830102.8
(22) Date of filing: 07.03.1996
(51) Int. Cl.: A01M 1/06, A01M 1/08

(54) **Apparatus to capture insects and the like**
Verfahren zum Fangen von Insekten und dergleichen
Appareil pour la capture d'insectes et analogues

(30) Priority: 08.06.1995 IT MI951219
(43) Date of publication of application: 11.12.1996
(73) Proprietor: MO-EL S.r.l., I-42027 Montecchio Emilia (RE) (IT)
(72) Inventor: Bertani, Carlo, Montechiarugolo (PR) (IT)
(74) Representative: Righetti, Giuseppe

(56) References cited:
- EP-A- 0 237 453
- WO-A-87/06795
- FR-A- 618 847
- FR-A- 1 144 520
- US-A- 1 807 550

## Description

The present invention relates to an apparatus to capture insects and the like, comprising the features defined in the preamble of claim 1

It is known that in civil use premises and in many environments intended for industrial use, the requirement of eliminating flying insects such as flies, mosquitoes and so on is becoming increasingly more felt, both due to the great trouble caused by said insects and for obvious hygienic reasons.

For the purpose, in addition to conventional insecticides, different types of devices capable of capturing and optionally substantially eliminating all types of flying insects have been widely used.

In greater detail, devices comprising a light source designed to attract flying insects have been widely used in the past, close to which light source a panel coated with paper having a sticky surface, in particular flypaper, was positioned.

While these types of devices are still widely spread, they however have many operating restrictions. It should be noted in fact that devices of this type can only capture insects that directly rest on the sticky paper. In addition, the captured insects remain attached to the flypaper surface, which brings about clear drawbacks both from the hygienic and aesthetic point of view.

In addition to the above described devices, also widely spread are devices of a second type that provide the use, instead of the flypaper, of a grid of electrical cables capable of inflicting an electrical discharge to the insects coming close to the lamp. These devices however are not always reliable in that they do not succeed in eliminating relatively big insects such as wasps, bees and the like. In addition, these devices very often cause burst of the insect body, so that the different parts of it are dispersed in the surrounding atmosphere, which brings about obvious inconveniences from a hygienic point of view. Finally, the electrical-discharge devices are noisy and irritating and therefore hardly appropriate for domestic premises.

Due to the above listed drawbacks, apparatuses of a different typology have recently had a wide spread, in which the flying insects, when they come close to the apparatus, are swallowed up or drawn into a suction duct and conveyed towards a collection chamber where generally insecticidal and/or germicidal means operates, such as chemicals, lamps, resistors, or other means.

In greater detail, apparatuses of this third type have a holding body internally defining said main suction duct, in which one or more suction fans operate. Generally, close to the inlet opening of the main duct there is a light source adapted to attract the insects to the apparatus. Disposed downstream of the suction fan is a collection chamber communicating with the main duct and adapted to receive the insects as they are captured. Also provided at the outlet opening of the main duct is a filtering grid integral with the holding body and capable of enabling evacuation of the air stream while at the same time preventing the already captured insects from escaping, so that said insects are lead to move towards the collection chamber. Generally the collection chamber is defined close to an extractable drawer that can be removed from the holding body to enable periodical cleaning operations.

While the apparatuses in accordance with the above typology solve all drawbacks typical of the previously described devices, they too suffer from important operating problems.

It should be noted in fact that the insects that are sucked by turns into the main duct tend to impinge and smash against the filtering grid that necessarily requires a periodical cleaning.

However, as already mentioned, the filtering grid in the apparatuses of known type is integral with the holding body and, as a result, it is very difficult to remove dirt and insects that are gradually deposited thereon without substantially dismantling most of the apparatus in question.

It should be also noted that, since the filtering grid is placed perpendicularly to the propagation direction of the air stream, the captured insects impinge with violence against the grid and adhere to the grid surface. Therefore, it is not possible to increase the speed of the air stream too much, because in this case quick occlusion of the whole filtering grid will occur. Furthermore, since this grid must also perform a protective task, it usually is of great stiffness and therefore cannot mitigate the insects' impacts at all.

Finally, with reference to the extractable drawer, it is pointed out that when the latter is disengaged from the apparatus, the still live insects possibly present in the collection chamber may escape therefrom giving rise to easily conceivable inconveniences.

Under this situation, the present invention aims at devising an apparatus for capturing insects and the like, capable of substantially overcoming all the above mentioned drawbacks.

In particular it is a fundamental object of the invention to provide an apparatus for capturing insects and the like in which provision is made for a filtering element adapted to be easily serviced and cleaned and, at the same time, capable of minimizing the impact violence of the insects as they are captured.

Another object of the invention is to provided an apparatus capable of generating, within the main duct, an air stream of great flow rate without giving rise to problems of quick occlusion of the filtering element and reflux of air, as a result of said great flow rate.

The foregoing and further objects that will become more apparent in the progress of the present description are substantially achieved by an apparatus for capturing insects and the like, characterized in that it comprises the features defined in the characterising portion of claim 1.

Further features and advantages will be best understood from the detailed description of a preferred embodiment of an apparatus for capturing insects and the like in accordance with the present invention, taken hereinafter, by way of non-limiting example, with reference to the accompanying drawings, in which:
- Fig. 1 is an elevational front view of the apparatus of the invention under operating conditions;
- Fig. 2 is view similar to that of Fig. 1 in which some components of the apparatus are partly drawn out of the holding body;
- Fig. 3 is a sectional view taken along line III-III in Fig. 1;
- Fig. 4 is a diagrammatic sectional view of the extractable drawer associated with the apparatus in question, taken along line IV-IV in Fig. 1;
- Fig. 5 is a sectional view similar to the one in Fig. 4, in which the drawer is partly drawn out;
- Fig. 6 is a sectional view taken along line VI-VI in Fig. 4;
- Fig. 7 is a sectional view taken along line VII-VII in Fig. 2.

Referring to the drawings, an apparatus for capturing insects and the like in accordance with the present invention has been generally identified by reference numeral 1.

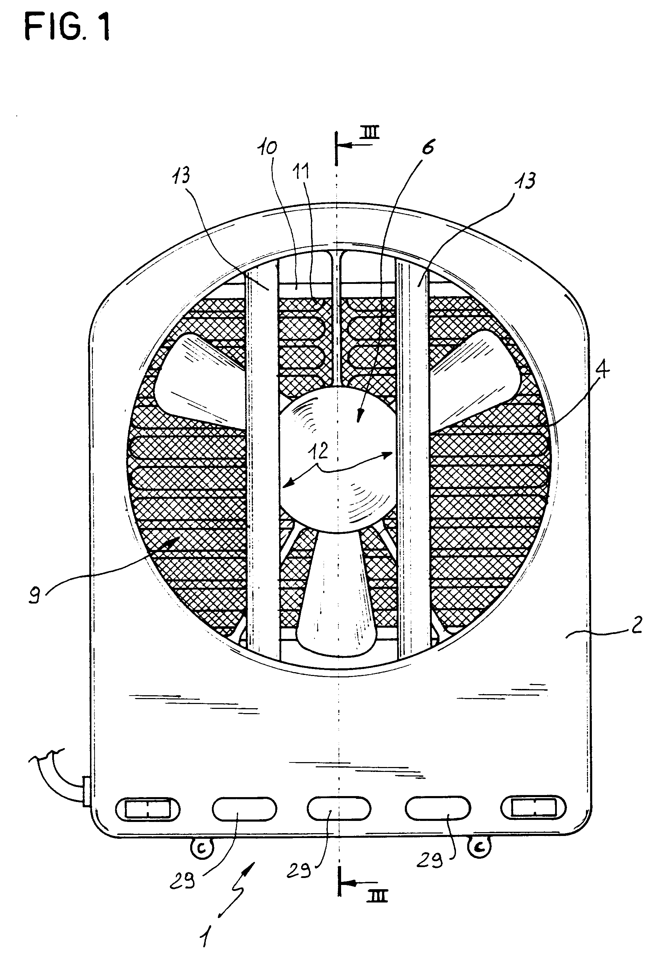

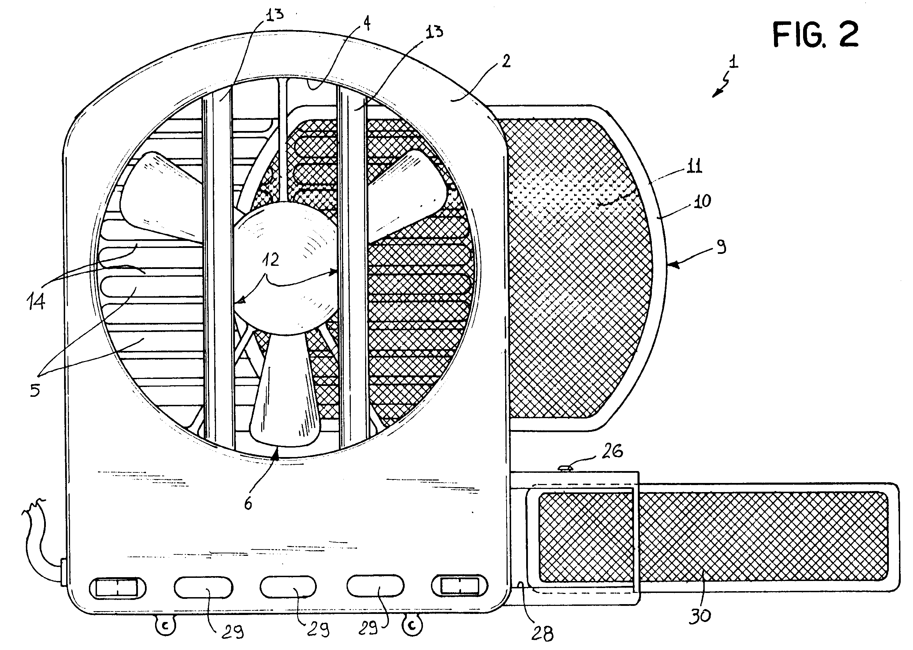

Apparatus 1 comprises a holding body, generally denoted by 2, internally defining at least one main suction duct 3 having at least one inlet opening 4 and at least one outlet opening 5. Sucking means 6 operates at the main duct 3 and it consists of at least one suction fan located immediately downstream of the inlet opening 4. The sucking means 6 is adapted to define an air stream between the inlet opening 4 and outlet opening 5 in order to swallow up or draw into body 3 , all insects coming close to the inlet opening 4. It is to note that, for the purpose of attracting the insects and make them come close to the apparatus 1, at least one light source 12 is provided which operates in close proximity to the inlet opening 4. In this case, as shown in Figs. 1 and 2, two upright lamps 13 are provided and secured immediately upstream of the fan 6.

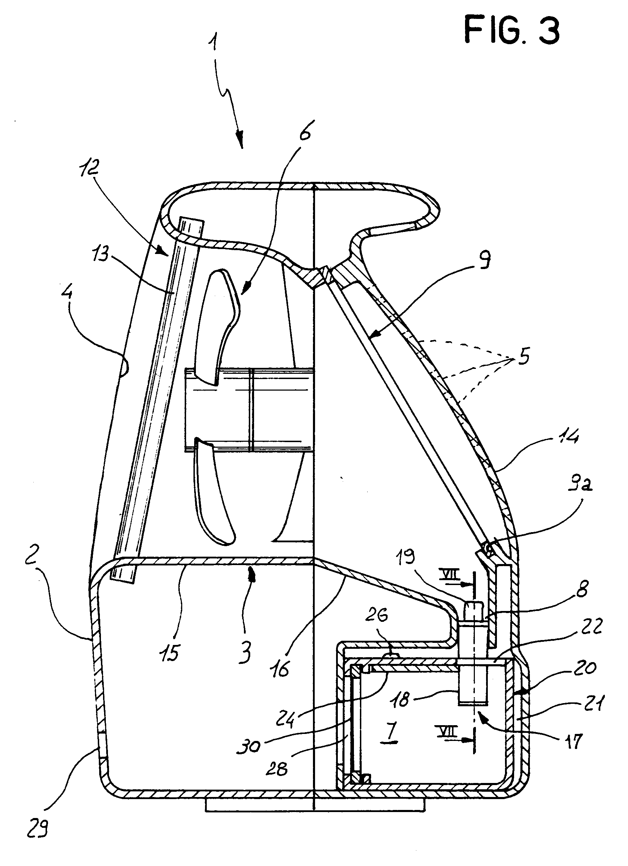

Apparatus 1 further comprises a collection chamber 7 in which germicidal means can optionally operate, which chamber is brought into fluid communication with the main duct 3 downstream of the sucking means 6. More particularly, as shown in Fig. 3, the collection chamber 7 receiving the insects as they are captured is brought into fluid communication with the main duct 3 via a connecting channel 8 preferably formed at a terminal area of the main duct 3.

Advantageously, apparatus 1 further comprises a filtering element 9 removably attached to the holding body 2 close to the outlet opening 5 and active on the air stream to substantially inhibit ejection of the captured insects through the outlet opening.

In more detail, the filtering element 9 is slidably engaged in a through seating 9a formed in a wall of the holding body 2 and therefore it can be easily removed for cleaning and replacement.

It is to be noted that, preferably, the filtering element 9 extends in an inclined plane with respect to an axial advancing direction of the air stream, to deviate the captured insects towards the duct 8 and therefore the collection chamber 7. Due to this particular arrangement of the filtering element 9 the possibility that the insect will impinge on the filtering element 9 surface in a direction perpendicular thereto is also prevented, thereby reducing the impact force of the insects and therefore pulping of same, which would lead parts of the insects to remain attached to the filter surface causing a quick clogging of the filter itself.

Advantageously, the filtering element 9 is provided to be formed of a supporting frame 10 and a filtering cloth 11 perimetrically fixed to the supporting frame. This structure is very efficient in that the filtering cloth, due to its intrinsic deformability, helps in further mitigating the impact force between the filtering element surface and the insects.

In other words, due to the structure of the filtering element 9 and its particular arrangement, the fan 6 can be moved in such a manner that an air stream of a higher flow rate than that of conventional devices of known type is generated, without on the other hand giving rise to an excessive clogging of the filtering element.

Still with reference to the filtering element 9, it is to note that in said element the ratio of the free air-passage port to the cross-sectional area of the main duct at the filtering element is included between 0.2 and 0.6. In an original manner, it could be ascertained that, in order to promote an air stream as much uniform as is possible between the inlet opening 4 and outlet opening 5 and in order to avoid formation of a conter-pressure which is likely to create a return air stream to the inlet opening 4, the ratio of the free passage port of the filtering element 9 to the cross-sectional area of the main duct 3 at the filtering element must be preferably included between 0.3 and 0.5.

Downstream of the filtering element 9 and axially spaced apart therefrom, provision is also made for a protection grid 14 integral with the holding body 2.

In order to improve the efficiency of the apparatus in question as much as possible, the main duct 3 is provided to comprise a first portion 15, of a substantially constant transverse section, and a second portion 16, following the first portion and of an increasing transverse section away from the inlet opening 4, so as to define a diffuser capable of greatly reducing the air speed, the flow rate being unchanged. It is to note that for an appropriate operation, the ratio between the area of the inlet opening 4 and that of the outlet opening 5 should be at least 0.7. It is apparent that, by virtue of this particular conformation of the main duct 3, the insects reach the filtering element 9 at an appropriate speed even if the flow rate of apparatus 1, and therefore the sucking force of same, is greatly increased.

Preferably, as shown in the accompanying drawings, the first portion 15 of the main duct 3 has a substantially cylindrical conformation, whereas the second portion 16 substantially has the form of a truncated cone. This ensures a good propagation of the air stream generated by the fan 6.

Referring particularly to Fig. 3, it is also to point out that the sucking means 6 is positioned at the first portion of duct 3, whereas the connecting channel 8 and therefore the collection chamber 7 are brought into fluid communication with the second portion of the main duct 3.

Advantageously, operatively interposed between the collecting chamber 7 and the main duct 3 is a closure member 17 inhibiting the fluid communication between the main duct and the collection chamber 7 when the apparatus 1 is under non-operating conditions, in order to prevent the insects possibly present in the collection chamber from escaping.

Preferably, the closure member 17 comprises at least one plate-like element 18 rotatably in engagement with the holding body 2, for example at said connecting channel 8 and movable, upon the action of the air stream, between a closed position, in which it separates the collection chamber 7 from the main duct 3, and an open position, in which it allows a fluid communication between the collection chamber and main duct.

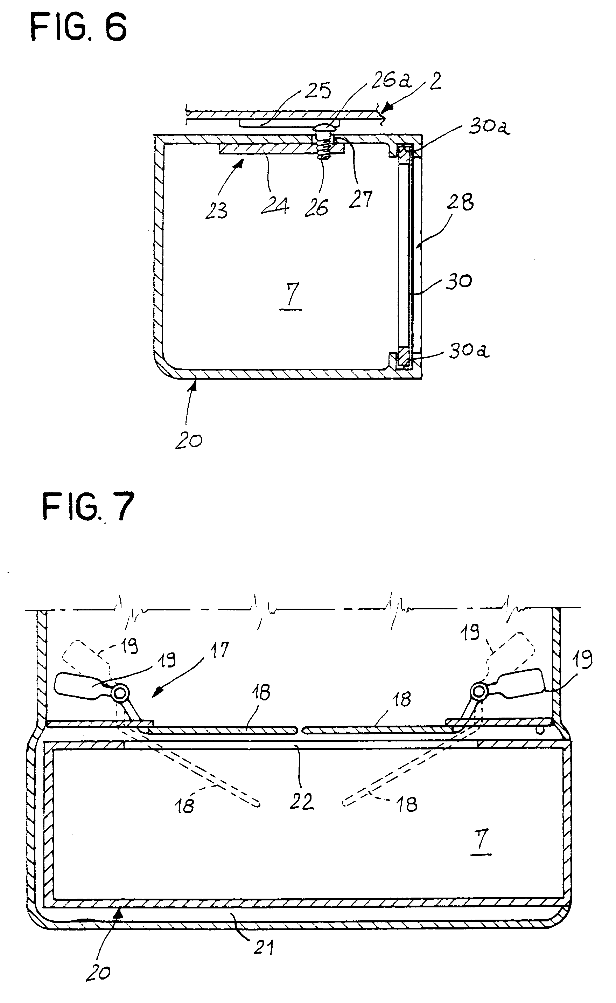

Active on the plate-like element 18 is return means 19 which is arranged to move said element to the closed position so that, in the absence of an air stream, the insects already present in the collection chamber cannot come back to the main duct. In the embodiment herein illustrated, as shown in Fig. 7, the closure member 17 is actually formed of two symmetrically opposed platelike elements 18. In addition, the returrn means 19 consists of two counterweights, each of which is directly carried by the respective plate-like element. Clearly, the return means 19 can consist of mere torsion springs as well, and also of other members capable of accomplishing the same function as that described above.

As viewed in particular from Figs. 2 and 3, apparatus 1 also comprises an extractable drawer 20 removably engaged in a preferably horizontal guide seating 21, formed in the holding body below the duct 3. This extractable drawer defines the collection chamber 7 into which the insects are pushed and, for the purpose, it has an access opening 22 facing the connecting channel 8 and therefore the main duct 3.

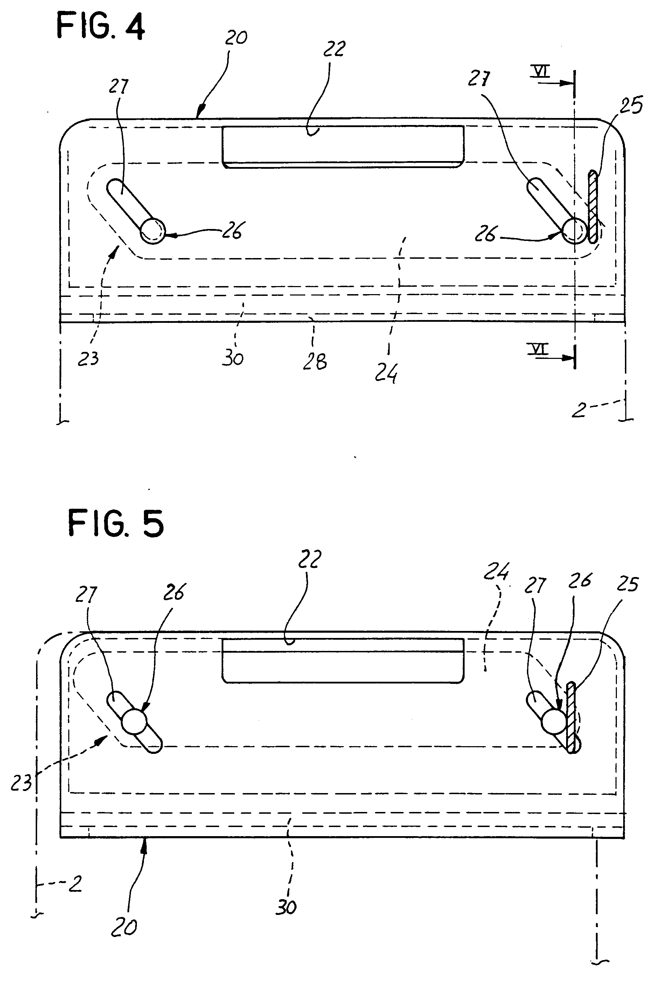

Advantageously, the extractable drawer 20 comprises a closing element 23 located at the access opening 22 and movable between an open position, at which the extractable drawer is inserted in said guide seating, and a closed position, at which the extractable drawer is partly drawn out of the guide seating. Preferably, as shown in Figs. 4 and 5, the closing element 23 comprises at least one plate 24 carrying out translation at the access opening 22 upon the action of a fixed locator 25 integral with the holding body. More particularly, plate 24 integrally carries one or more sliding pins 26 movable along corresponding guide slits 27 formed in one of the drawer walls. Each sliding pin 26 in turn has a swollen head 26a interfering with said fixed locator 25, consisting for example of a mere rib, thereby causing displacement of the plate from the position in Fig. 4 to that in Fig. 5, following a drawing-out movement imparted to the drawer.

The extractable drawer 20 also comprises one or more discharge ports 28 brought into fluid communciation with one or more additional air outlet openings 29 formed in the holding body 2, below the opening 4 for example. Drawer 20 also comprises an auxiliary filtering element 30 removably in engagement with the drawer close to said discharge port 28, to prevent the insects entrapped in the chamber 7 from escaping towards the auxiliary openings 29.

The auxiliary filtering element too is also slidably engaged to advantage in a respective through seating 30a formed in the extractable drawer 20.

Operation of the apparatus for capturing insects and the like according to the invention, described above mainly as regards structure, is as follows.

Under operating conditions, the lamps 13 and suction fan 6 are activated. In particular, the lamps are adapted to attract the insects to the inlet opening 4, so that said insects are captured and entrained by the air stream entering the main duct 3. The thus entrapped insects go on downstream of the fan and reach the filtering element 9 by which they are advantageously deviated towards the connecting channel 8 and then towards the collection chamber 7 within the extractable drawer. As already said, during the suction step, the air stream in the main duct 3 is subjected to an importance slowing down, due to the diffuser-shaped conformation of the second portion 16, thereby obviously reducing the impact speed of the insects against the filtering element 9. It should be also pointed out that the air stream entering the opening 4 is practically divided into one portion coming out of the outlet opening 5 and one portion going on to the collection chamber 7, passing through the discharge port 28 formed in the extractable drawer where the auxiliary filtering element 30 operates and finally coming out of the auxiliary opening 29 formed in the front wall of the holding body.

It is pointed out that until there is an air stream, the plate-like elements 18 of the closure member 17 are rotated downwardly (chain line in Fig. 7), thereby ensuring an appropriate fluid communication between the duct 3 and collection chamber 7.

As soon as the air stream is interrupted, the aerodynamic force pushing the plate-like elements 18 stops and said elements 18, upon the action of respective counterweights, are brought to the closed position (solid line in Fig. 8) thereby separating the collection chamber from the main duct and therefore preventing any insect escape towards the duct.

When the periodical servicing of the apparatus is to be made, the filtering element 9 can be drawn by merely making it slide along the corresponding seating, as shown in Figs. 1 and 2, so that cleaning and replacement of same, if necessary, can be carried out. The same is valid for the auxiliary filtering element engaged close to the discharge port of the extratable drawer.

Drawer 20 too can be drawn out of the holding body by a mere slide action along the respective guide seating 21. During this operation, the closing element 23 moves from the open position to the closed one, thereby preventing the escape of still live insects, if any. More particularly, the head of the pins associated with plate 24 comes to interfere with the filled locator 25 associated with the holding body. It should be noted that when the plate 24 moves to close the access opening, that is when the pins are at the end of their stroke along the guide slits, further drawing out of the drawer brings the pin head to step over the fixed locator. In this manner, when the drawer is to be reinserted, the filled locator will act on the opposite side of the head of each pin causing movement of the plate 24 to the open position. It will be understood that also during this step of reinserting the drawer, as soon as the plate reaches the end of its stroke, the fixed locator will step over the slide pin heads again.

The invention achieves important advantages.

Firstly, since both the filtering element 9 and auxiliary filtering element are removably engaged, these components can be easily disengaged from the holding body and the extractable drawer respectively, for carrying out the periodical cleaning and replacement operations.

Positioning of the filtering element 9 in an inclined plaen with respect to the air stream direction is also particularly advantageous, in that, in this way, insects are more efficiently deviated to the collection chamber, while at the same time too strong perpendicular impacts against the filtering element surface are avoided. This, as known, results in smashing of the insects' bodies and therefore a quick occlusion of the filtering element.

Taking into account the above point of view, it is also advantageous the fact that the filtering element consists of a cloth that, as such, has a good deformability and therefore a good capability of absorbing shocks due to the impacts of the insects pushed towards the collection chamber, without being subjected to many damages and above all without causing a progressive clogging of the filtering element surface.

Furthermore, the second portion 16 of the main duct 3 reduces the impact speed of the insects on the filtering element, the flow rate being equal.

It should be also recognized that the particular ratio between the free passage area of the filtering element and the cross-sectional area of the main duct at the filtering element represents an excellent compromise between the filtering capacity and the necessity of discharging the incoming air stream in order to avoid a reflux of air to the inlet opening, which clearly would involve a weak efficiency in apparatus 1.

In addition, the closure member 17 is particularly efficient in that the return means, consisting in this case of couterweigths, ensures an immediate closure of the collecting chamber as soon as the air stream stops.

It is finally emphasized the great practical character and operating efficiency of the extractable drawer 20, due in particular to the presence of the closing element 23 located at the access opening. In fact, when the insects present in the collection chamber are to be removed, one can act without any problem on the drawer, in that when the latter has been drawn out, the immediate closing of the access opening 22 by the plate 24 occurs. It is to note that the plate 24 is set in movement by a fixed locator 25 consisting of a mere rib the manufacture of which involves practically negligible costs.

Obviously, many modifications and variations may be made to the present invention, all of them falling within the scope of the inventive idea characterizing it.

In particular, it is to note that the described features with reference to the structure of the main duct 3 and the extractable drawer can exist independently of each other and independently of the presence of a filtering element removably fixed to the holding body. In other words, an apparatus for capturing insects and the like can be made substantially similar to those of the traditional type and then said apparatus can be equipped with a duct having a second portion of a diver-ging conformation away from the inlet opening in order to obtain the advantages explained above with reference to this feature.

Likewise, provision may be made for an apparatus quite similar to those of the known art and further comprising an extractable drawer equipped with a closing element similar to the above described one.

## Claims

1. An apparatus to capture insects and the like, comprising:
- a holding body (2) defining at least one main suction duct (3) having at least one inlet opening (4) and at least one outlet opening (5);
- sucking means (6) operating at the main duct (3) and arranged, to define an air stream between said inlet opening (4) and outlet opening (5) to take in insects and the like;
- a filtering element (9) fixed to the holding body (2) close to the outlet opening (5) and active on said air stream to substantially inhibit ejection of said insects and the like through said outlet opening (5);
- an extractable drawer (20) removably engaged in a guide seating (21) formed in the holding body (2) to define a collection chamber (7) brought into fluid communication with the main duct (3) to receive said insects and the like,
characterized in that it comprises a closing element (23) disposed close to an access opening (22) of the drawer (20) and movable between an open position, at which the extractable drawer (20) is fitted in said guide seating (21), and a closed position at which the extractable drawer (20) is at least partly drawn out of the guide seating (21).

2. An apparatus according to claim 1,
characterized in that said filtering element (9) is removably fixed to the holding body (2).

3. An apparatus according to claim 1,
characterized in that said main duct (3) comprises a first portion (15), of a substantially constant transverse section, and a second portion (16), following said first portion (15), of an increasing transverse section away from said inlet opening (4).

4. An apparatus according to claim 1, characterized in that said filtering element (9) substantially extends in an inclined plane with respect to an axial advancing direction of said air stream, to deviate said insects arid the like to the collection chamber (7).

5. An apparatus according to claim 1, characterized in that said filtering element (9) comprises:
- a supporting frame (10) and
- a filtering cloth (11) perimetrically in engagement with the supporting frame (10).

6. An apparatus according to claim 1, characterized in that in said filtering element (9) there is a ratio between the free air-passage port and the cross-sectional area of the main duct (3) at the filtering element (9).

7. An apparatus according to claim 6, characterized in that said ratio is preferably included between 0.3 and 0.5.

8. An apparatus according to claim 2, characterized in that said filtering element (9) is slidably engaged in a through slit (9a) formed in a wall of said holding body (2).

9. An apparatus according to claim 1, characterized in that said sucking means (6) comprises at least one suction fan (6) placed immediately downstream of said inlet opening (4).

10. An apparatus according to claim 1, characterized in that it comprises at least one light source (12) operating at the inlet opening (4) and arranged to attract said insects and the like thereto.

11. An apparatus according to claim 1, characterized in that it comprises a protection grid (14) axially spaced apart downstream of said filtering element (9) and integral with the holding body (2).

12. An apparatus according to claim 2, characterized in that said first portion (15) has a substantially cylindrical configuration and in that said second portion (16) is substantially in the form of a truncated cone.

13. An apparatus according to claim 2, characterized in that said sucking means (6) operates at said first portion (15).

14. An apparatus according to claim 2, characterized in that said collection chamber (7) is brought into fluid communication with the second portion (16) of the main duct.

15. An apparatus according to claim 1, characterized in that it comprises a first closure member (17) operatively interposed between said main duct (3) and collection chamber (7).

16. All apparatus according to claim 15, characterized in that said closure member (17) comprises:
- at least one plate-like element (18) rotatably in engagement with the holding body (2) and movable, upon the action of said air stream, between a closed position, in which it separates the collection chamber (7) from the main duct (3), and an open position in which it enables a fluid communication between the collection chamber (7) and main duct (3);
- return means (19) active on the plate-like element (18) and arranged to move said element (18) to said closed position.

17. An apparatus according to claim 1, characterized in that said access opening (22) faces said main duct (3) for receiving said insects and the like.

18. An apparatus according to claim 1, characterized in that said closing element (23) comprises at least one plate (24) carrying out translation at said opening access (22) upon the action of at least one fixed locator (25) integral with the holding body (2).

19. An apparatus according to claim 1, characterized in that said extractable drawer (20) comprises at least one discharge port (28) brought into fluid communication with at least one auxiliary outlet opening (29) formed in the holding body (2), and an auxiliary filtering element (30) removably fixed to the extractable drawer (20) close to said discharge port (28) to inhibit escape of tie insects entrapped within the collection chamber (7), towards said auxiliary opening (28).

20. An apparatus according to claim 19, characterized in that said auxiliary filtering element (30) is slidably engaged in a through slit (30a) formed in a wall of said extractable drawer (20).

## Patentansprüche

1. Gerät zum Fangen von Insekten und ähnlichen, umfassend:
- ein Gehäuse (2), das mindestens eine Hauptsaugleitung (3) mit mindestens einer Eintrittsöffnung (4) und mindestens einer Austrittsöffnung (5) festlegt;
- Saugmittel (6), die im Bereich der Hauptleitung (3) wirken und bereit gestellt sind, einen Luftstrom zwischen der Eintrittsöffnung (4) und der Austrittsöffnung (5) zum Ansaugen von Insekten und ähnlichen zu bewirken;
- ein Siebelement (9), das am Gehäuse (2) in der Nähe der Austrittsöffnung (5) in Eingriff steht und auf den Luftstrom wirkt, um im wesentlichen zu verhindern, daß die Insekten und ähnliche durch die Austrittstöffnung (5) ausgestoßen werden;
- einen ausziehbaren Schieber (20), der abnehmbar in einem aus dem Gehäuse (2) ausgenommenen Führungssitz (21) eingreift, um eine Sammelkammer (7) festzulegen, die mit der Hauptleitung (3) zur Aufnahme der Insekten oder ähnlichen in fluidischer Verbindung steht,
dadurch gekennzeichnet, daß es ein Schließelement (23) umfaßt, das in der Nähe einer Zugangsöffnung (22) des Schiebers (20) und zwischen einer Offenstellung, im Bereich der des ausziehbaren Schieber (20) im Führungssitz (21) eingebracht ist, und einer Schließstellung verstellbar ist, im Bereich weicher der ausziehbare Schieber (20) mindestens teilweise aus dem Führungssitz (21) ausgezogen ist.

2. Gerät nach Anspruch 1, dadurch gekennzeichnet, daß das Siebelement (9) auf abnehmbare Art und Weise am Gehäuse (2) in Eingriff steht.

3. Gerät nach Anspruch 1, dadurch gekennzeichnet, daß die Hauptleitung (3) einen ersten Abschnitt (15) mit einem im wesentlichen konstanten Querschnitt und einen zweiten Abschnitt (16) umfaßt, der am ersten Abschnitt (15) anschließt und einen Querschnitt besitzt, der mit Entfernung von der Eintrittsöffnung (9) einen zunehmenden Querschnitt besitzt.

4. Gerät nach Anspruch 1, dadurch gekennzeichnet, daß das Siebelement (9) sich im wesentlichen gemäß einer gegenüber einer axialen Vorschubrichtung des Luftstromes geneigten Ebene entwickelt, um die Insekten und ähnliche in Richtung der Sammelkammer (7) abzulenken.

5. Gerät nach Anspruch 1, dadurch gekennzeichnet, daß das Siebelement (9) umfaßt:
- einen Tragrahmen (10) und
- einen Siebstoff (11), der umfangsmäßig am Tragrahmen (10) in Eingriff steht.

6. Gerät nach Anspruch 1, dadurch gekennzeichnet, daß das Siebelement (9) ein Verhältnis zwischen der lichten Luftdurchtrittsweite und der Fläche des Querschnittes der (3) Hauptleitung (3) im Bereich des Siebelementes (9) aufweist.

7. Gerät nach Anspruch 6, dadurch gekennzeichnet, daß dieses Verhältnis bevorzugter Weise zwischen 0, 3 und 0, 5 liegt.

8. Gerät nach Anspruch 2, dadurch gekennzeichnet, daß das Filterelement (9) in einem Durchgangsschlitz (9a) gleitbar eingreift, der an einer Wand des Gehäuses (2) ausgenommen ist.

9. Gerät nach Anspruch 1, dadurch gekennzeichnet, daß die Saugmittel (6) mindestens ein Luftsaugrad (6) umfassen, das unmittelbar nach der Eintrittsöffnung (4) angeordnet ist.

10. Gerät nach Anspruch 1, dadurch gekennzeichnet, daß es mindestens eine Lichtquelle (12) umfaßt, die im Bereich der Eintrittsöffnung (4) wirkt und bereit gestellt ist, um die Insekten und ähnliche in Richtung dieser letzteren anzuziehen.

11. Gerät nach Anspruch 1, dadurch gekennzeichnet, daß es ein Schutzgitter (14) umfaßt, das axial nach dem Siebelement (9) beabstandet ist und fest am Gehäuse (2) liegt.

12. Gerät nach Anspruch 2, dadurch gekennzeichnet, daß der erste Abschnitt (15) eine im wesentlichen zylindrische Ausbildung aufweist, und dadurch, daß der zweite Abschnitt (16) eine im wesentlichen kegelstumpfförmige Ausbildung aufweist.

13. Gerät nach Anspruch 2, dadurch gekennzeichnet, daß die Saugelemente (6) im Bereich des ersten Abschnittes (15) wirken.

14. Gerät nach Anspruch 2, dadurch gekennzeichnet, daß die Sammelkammer (7) mit dem zweiten Abschnitt (16) der Hauptleitung in fluidischer Verbindung steht.

15. Gerät nach Anspruch 1, dadurch gekennzeichnet, daß es ein erstes Verschlußorgan (17) umfaßt, daß wirksam zwischen der Hauptleitung (3) und der Sammelkammer (7) zwischengeschaltet ist.

16. Gerät nach Anspruch 15, dadurch gekennzeichnet, daß das Verschlußorgan (17) umfaßt:
- mindestens ein lamellenförmiges Element (18), das verschwenkbar am Gehäuse (2) in Eingriff steht und unter Wirkung des Luftstromes zwischen einer Schließstellung, in der es die Sammelkammer (7) von der Hauptleitung (3) abdichtet, und einer Offenstellung verstellbar ist, die eine fluidische Verbindung zwischen der Sammelkammer (7) und der Hauptleitung (3) ermöglicht wird;
- Rückstellmittel (19), die auf das lamellenförmige Element (18) wirken und bereitgestellt sind, das lamellenförmige Element (18) in Schließstellung zu bewegen.

17. Gerät nach Anspruch 1, dadurch gekennzeichnet, daß die Zugangsöffnung (22) in Richtung der Hauptleitung (3) gerichtet ist, um die Insekten und ähnliche aufzunehmen.

18. Gerät nach Anspruch 1, dadurch gekennzeichnet, daß das Schließelement (23) mindestens eine Platte (24) umfaßt, die im Bereich der Zugangsöffnung (22) durch Einwirkung mindestens eines festen Anschlages (25) bewegtt wird, der am Gehäuse (2) festliegt.

19. Gerät nach Anspruch 1, dadurch gekennzeichnet, daß der ausziehbare Schieber (20) mindestens eine Auslaßöffnung (28), die in fluidischer Verbindung mit mindestens einer Hilfsaustrittsöffnung (29) steht, die am Gehäuse (2) ausgenommen ist, und ein Hilfssiebelement (30) umfaßt, daß abnehmbar am ausziehbaren Schieber (20) in der Nähe der Auslaßöffnung (28) angreift, um die Flucht der innerhalb der Sammelkammer (7) gefangenen Insekten in Richtung der Hilfsöffnung (28) zu verhindern.

20. Gerät nach Anspruch 19, dadurch gekennzeichnet, daß das Hilfssiebelement (30) gleitbar in einem Durchgangsschlitz (30a) eingreift, der an einer Wand des ausziehbaren Schiebers (20) ausgenommen ist.

## Revendications

1. Appareil pour la capture d'insectes et analogues, comprenant:
- un corps de logement (2) définissant au moins un conduit principal d'aspiration (3) ayant au moins une ouverture d'entrée (4) et au moins une ouverture de sortie (5);
- des moyens aspirants (6) agissant en correspondance du conduit principal (3) et destinés à définir un écoulement d'air entre ladite ouverture d'entrée (4) et ladite ouverture de sortie (5) pour entraîner dans son remous les insectes et analogues;
- un élément filtrant (9) fixé au corps de logement (2) à proximité de l'ouverture de sortie (5) et actif sur ledit écoulement d'air pour empêcher essentiellement l'expulsion desdits insectes et analogue à travers ladite ouverture de sortie (5);
- un tiroir extractible (20) engagé de manière amovible dans un siège de guidage (21) formé dans le corps de logement (2) à définir une chambre de collecte (7) mise en communication de fluide avec le conduit principal (3) pour recevoir lesdits insectes et analogues,
caractérisé en ce qu'il comporte un élément de fermeture (23) disposé proche d'une ouverture' d'accès (22) du tiroir (20) et mobile entre une position ouverte, à laquelle le tiroir extractible (20) est inséré dans ledit siège de guidage (21) et une position fermée à laquelle le tiroir extractible (20) est enlevé au moins partiellement dudit siège de guidage (21).

2. Appareil selon la revendication 1, caractérisé en ce que ledit élément filtrant (9) est fixé au corps de logement (2) de manière amovible.

3. Appareil selon la revendication 1, caractérisé en ce que ledit conduit principal (3) comporte une première portion (15), de section transversale sensiblement constante, et une deuxième portion (16) suivant ladite première portion (15), de section transversale allant croissant au fur et à mesure qu'on s'éloigne de ladite ouverture d'entrée (4).

4. Appareil selon la revendication 1, caractérisé en ce que ledit élément filtrant (9) s'étend essentiellement dans un plan incliné par rapport à une direction axiale d'avance dudit écoulement d'air, pour dévier lesdits insectes et analogues vers la chambre de collecte (7).

5. Appareil selon la revendication 1, caractérisé en ce que ledit élément filtrant (9) comporte:
- un bâti support (10) et
- une toile filtrante (11) en engagement le long de son périmètre avec le bâti support (10).

6. Appareil selon la revendication 1, caractérisé en ce que ledit élément filtrant (9) présente un rapport entre la lumière de passage de l'air et l'aire en coupe transversale du conduit principal (3) en correspondance de l'élément filtrant (9).

7. Appareil selon la revendication 6, caractérisé en ce que ledit rapport est de préférence compris entre 0,3 et 0,5.

8. Appareil selon la revendication 2, caractérisé en ce que ledit élément filtrant (9) est engagé de manière coulissante dans une fente de passage (9a) formée dans une paroi dudit corps de logement (2).

9. Appareil selon la revendication 1, caractérisé en ce que lesdits moyens aspirants (6) comportent au moins un ventilateur d'aspiration (6) mis immédiatement à l'aval de ladite ouverture d'entrée (4).

10. Appareil selon la revendication 1, caractérisé en ce qu'il comporte au moins une source lumineuse (12) agissant en correspondance de l'ouverture d'entrée (4) et agencée de manière à attirer vers cette dernière lesdits insectes et analogues.

11. Appareil selon la revendication 1, caractérisé en ce qu'il comporte une grille de protection (14) espacée en sens axial à l'aval dudit élément filtrant (9) et solidaire du corps de logement (2).

12. Appareil selon la revendication 2, caractérisé en ce que ladite première portion (15) a une configuration essentiellement cylindrique et en ce que ladite deuxième portion (16) est essentiellement de forme tronconique.

13. Appareil selon la revendication 2, caractérisé en ce que lesdits moyens aspirants (6) agissent en correspondance de ladite première portion (15).

14. Appareil selon la revendication 2, caractérisé en ce que ladite chambre de collecte (7) est mise en communication de fluide avec la deuxième portion (16) du conduit principal.

15. Appareil selon la revendication 1, caractérisé en ce qu'il comporte un premier élément de fermeture (17) interposé pour son fonctionnement entre ledit conduit principal (3) et la chambre de collecte (7).

16. Appareil selon la revendication 15, caractérisé en ce que ledit élément de fermeture (17) comporte:
- au moins un élément en forme de plaque (18) en engagement à rotation avec le corps de logement (2) et mobile, sous l'action dudit écoulement d'air, entre une position fermée, dans laquelle il sépare la chambre de collecte (7) du conduit principal (3), et une position ouverte dans laquelle il permet une communication de fluide entre la chambre de collecte (7) et le conduit principal (3);
- des moyens de rappel (19) actifs sur l'élément en forme de plaque (18) et destinés à déplacer ledit élément (18) à ladite position fermée.

17. Appareil selon la revendication 1, caractérisé en ce que ladite ouverture d'accès (22) se trouve en regard dudit conduit principal (3) pour recevoir lesdits insectes et analogues.

18. Appareil selon la revendication 1, caractérisé en ce que ledit élément de fermeture (23) comporte au moins une plaque (24) effectuant une translation en correspondance de ladite ouverture d'accès (22) sous l'action d'au moins une butée fixe (25) solidaire du corps de logement (2).

19. Appareil selon la revendication 1, caractérisé en ce que ledit tiroir extractible (20) comporte au moins un orifice de décharge (28) mis en communication de fluide avec au moins une ouverture de sortie auxiliaire (29) formée dans le corps de logement (2), et un élément filtrant auxiliaire (30) fixé de manière amovible au tiroir extractible (20) à proximité dudit orifice de décharge (28) en vue d'empêcher la fuite des insectes, bloqués dans la chambre de collecte (7), vers ladite ouverture auxiliaire (28).

20. Appareil selon la revendication 19, caractérisé en ce que ledit élément filtrant auxiliaire (30) est engagé de manière coulissante dans une fente de passage (30a) formée dans une paroi dudit tiroir extractible (20).
